# EUROPEAN PATENT SPECIFICATION

(11) **EP 1 275 576 B1**
(45) Date of publication and mention of the grant of the patent: **28.12.2005**
(21) Application number: 02014772.4
(22) Date of filing: 04.07.2002
(51) Int. Cl.: B62D 49/02

(54) **Hydraulic system for a utility vehicle**
Hydraulisches System für ein Nutzfahrzeug
Système hydraulique pour un véhicule utilitaire

(30) Priority: 13.07.2001 US 905531
(43) Date of publication of application: 15.01.2003
(73) Proprietor: DEERE & COMPANY, Moline, Illinois 61265-8098 (US)
(72) Inventor: Smith, Ellis Junior, Martinez, GA 30907 (US); McCord, Christopher Thomas, Thompson, GA 30824 (US); Sprinkle, David Laverne, Warrenton, GA 30828 (US)
(74) Representative: Magin, Ludwig Bernhard

(56) References cited:
- DE-A- 10 127 898
- US-A- 3 791 454
- US-A- 4 934 462
- US-A- 5 125 232

## Description

The present invention relates to utility vehicles, such as loader-equipped tractors. Particularly, the invention relates to a hydraulic control system configured for operating both front and rear mounted tools.

Such a vehicle is shown in US4934462, which discloses the preamble of claim 1.

Utility tractors equipped with front loader buckets and rear mounted devices, such as hydraulically adjusted cultivators or rear blades, utilize a hydraulic selective control valve for controlling the movement of the front loader bucket, and a separate secondary hydraulic control valve for operating the rear mounted device. The selective control valve is operated by a primary control lever. The secondary hydraulic control valve is operated by a secondary control lever.

When an operator uses a vehicle having such a rear mounted device, the secondary lever and placement of the hand on the secondary lever are required to operate the rear mounted device. Moving the hand from one lever to another lever reduces productivity of the utility vehicle. Also, the primary lever and the secondary lever are typically placed on the vehicle fender and must have cables and/or linkages that connect the levers to the primary and secondary valves.

The placement of the secondary lever on the vehicle occupies otherwise usable space. The secondary control valve must be operated as a "power-beyond" device in an "open center" system. As such, the secondary control valve always generates heat and uses engine power, even while not in use. The secondary control valve must have linkages configured for control by the operator via the secondary lever. This often puts the controls in an undesirable location, or puts the secondary control valve undesirably close to the operator. Also, having a secondary control valve increases the probability for leakage and maintenance requirements.

The object of the invention is to provide a single control lever to operate multiple tools on a multi-functional vehicle. The present inventors have recognized the desirability of eliminating the secondary control valve from the open center hydraulic system to reduce cost, power consumption, heat generation, and maintenance requirements. The present inventors have recognized the desirability of conserving usable space in the vehicle operating area by eliminating the need for the secondary control lever.

The present invention provides a hydraulic system for a utility vehicle that comprises two operating implements or tools. The hydraulic system includes a first hydraulic operating implement and a second hydraulic implement both hydraulically flow-connected to a diverter valve. A source of pressurized hydraulic fluid is connected to a selective control valve, operated by a control lever, and the selective control valve is hydraulically flow-connected to the diverter valve. The diverter valve is selectively operated to hydraulically disconnect the control valve from the first hydraulic implement and connect the control valve to the second hydraulic implement. An implement-select actuator is signal-connected to the diverter valve and configured for alternately operating the first and second hydraulic implements using the control lever.

The select actuator can be a button switch mounted to the control lever that controls the selective control valve. The switch is pressed to energize one or more solenoid valves and/or one or more pilot operated valves that change the state of the diverter valve to direct pressurized hydraulic fluid to the second hydraulic implement. Optionally, the switch must be continuously depressed to operate the second hydraulic implement using the control lever or, alternatively, the switch is a toggle-type switch which changes states when actuated without requiring the switch to be continuously depressed. The invention allows the operator to maintain an efficient level of productivity and reduces the number of levers at the operator's station.

The present inventors have recognized the desirability of simplifying the linkage between the primary and secondary levers and the control valves. This is accomplished by eliminating the secondary lever altogether. The selection of the second hydraulic implement is now accomplished by the use of the diverter valve. Since the diverter valve is substantially self-contained, in effect, no linkage for spools need be penetrated into the diverter valve, and contamination of the electro-hydraulic valves is reduced.

Preferably, the diverter valve comprises a single solenoid-operated pilot valve and a plurality of hydraulic pilot operated spool valves or cartridge valves, wherein the hydraulic pilot valve controls pressurized hydraulic fluid flow to the plurality of spool valves or cartridge valves that either close or open to select hydraulic fluid flow direction to/from the first or to the second hydraulic implement. The pilot valve and spool valves are spring loaded to return the diverter valve state to directing pressurized fluid to/from the first hydraulic implement if power is cut off to the pilot valve.

Although the invention also encompasses the use of multiple solenoid valves rather than pilot operated spool valves, spool valves or cartridge valves controlled via pilot pressurized hydraulic fluid generate more force and are more reliable than the alternate design using multiple electrical solenoid valves.

For a typical first hydraulic implement, such as a loader bucket, a selective control valve, operated via a single control lever, has two or more spools slidable within a valve housing, each spool controlling one function such as: 1) raising and lowering the bucket, or 2) curling and dumping the bucket. At a rear of the vehicle, the second hydraulic implement can have several independent movement functions such as adjusting the position and attitude of a tiller, a cultivator, or a grapple.

The diverter switch, selectively operable from the operator's station, controls the activation of the diverter valve, diverting pressurized hydraulic fluid away from the two or more hydraulic couplers at the front of the vehicle, such as the two couplers associated with control of the bucket, to hydraulic couplers located at the rear of the vehicle. The bucket functions associated with the couplers are temporarily disabled and whatever operating implement is hydraulically connected to the rear hydraulic couplers is enabled.

The system of the invention can be configured to reset to the first hydraulic implement, such as the loader, each time the engine is switched off. A safeguard can be designed into the system to eliminate inadvertent actuation of a non-desired operating implement.

In operation, an operator pushes the diverter switch, located on the control lever, to activate the diverter valve. The switch then sends a current to the solenoid coil of the pilot valve on the diverter valve. The solenoid shifts a small pilot valve spool, which directs a pilot, pressurized hydraulic fluid to actuate the set of cartridge valves. The cartridge valves redirect the hydraulic fluid to another set of ports in the valve housing. Hydraulic tubing then directs the hydraulic fluid to another location or implement, such as to the rear of the vehicle, wherein it is available to operate a secondary hydraulic function. When the operator deactivates the diverter switch, by releasing the switch (in the case of a momentary switch) or alternatively by actuating the switch (in the case of a toggle switch) the diverter valve reverts to its primary function mode, wherein the hydraulic fluid is provided to the front of the vehicle, such as to operate the loader bucket.

A display on an instrument panel can also receive a current from the diverter switch on the control lever. The display will indicate to the operator that the diverter valve is actuated, or not. Electrical "lockouts" or activation switches can also be used as safety devices, such as enable and disable switches, and operator presence switches.

Numerous other advantages and features of the present invention will become readily apparent from the following detailed description of the invention and the embodiments thereof, from the claims and from the accompanying drawings.

### Brief Description Of The Drawings

- Figure 1: is a perspective view of a utility vehicle incorporating the system of the present invention;
- Figure 2: is a perspective view of a hydraulic control system of the present invention;
- Figures 3A: and 3B are control schematic diagrams of the hydraulic control system of figure 2;
- Figure 4: is a front perspective view of a diverter valve as used in the hydraulic control system shown in figure 2;
- Figure 5: is a rear perspective view of the diverter valve of figure 3;
- Figures 6A and 6B: are control schematic diagrams of an alternate embodiment hydraulic control system of the present invention;
- Figure 7: is a rear perspective exploded view of the control lever of Figure 2; and
- Figure 8: is a front view of a control panel of the present invention.

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

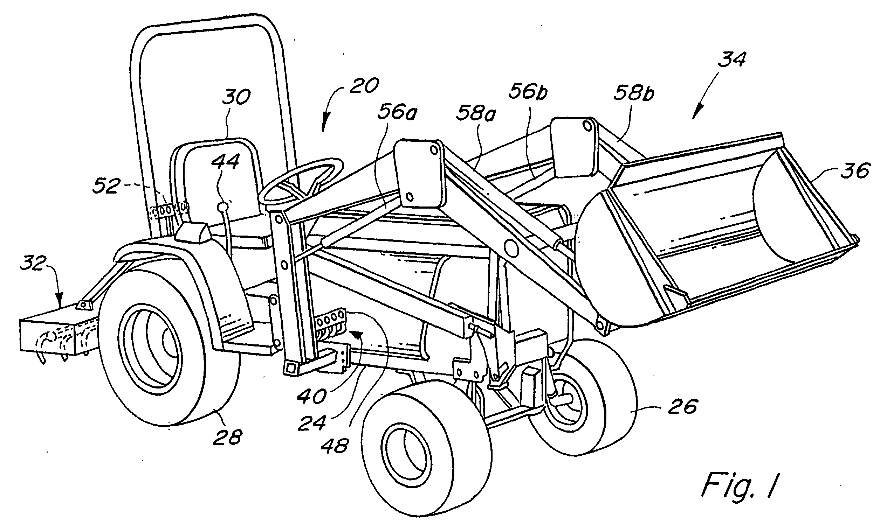

Figure 1 illustrates a utility tractor 20 that incorporates a hydraulic control system of the present invention. The utility tractor 20 includes a chassis 24 supported on a pair of front wheels 26 and larger rear wheels 28. The chassis supports a driver's seat 30. The tractor shown in Figure 1 is outfitted with a rear-mounted implement 32 such as a cultivator, a tiller or a grapple that includes one or more hydraulic cylinders, and a front mounted implement 34 such as a loader. The loader 34 includes a bucket 36. The utility tractor can be a JOHN DEERE 4000 Series tractor available from John Deere Commercial Products.

The present invention particularly relates to a hydraulic control system 40 used to alternately control movement of the front-mounted implement, such as the loader 34, particularly the loader bucket 36, and the rear-mounted implement 32. The loader bucket 36 is raised and lowered, and curled and dumped by respective movements of a control lever or joystick 44. The hydraulic control system includes a front-mounted manifold 48 of quick-disconnect hydraulic couplers (shown schematically), and a rear-mounted manifold 52 of quick-disconnect hydraulic couplers. Two of the hydraulic couplers of the front-mounted manifold 48 are coupled to hydraulic cylinders 56a, 56b used for raising and lowering the bucket 36, and two of the hydraulic couplers are coupled to hydraulic cylinders 58a, 58b for curling and dumping the bucket 36. The hydraulic couplers of the rear-mounted manifold 52 are coupled to hydraulic cylinders (not shown) of the rear-mounted implement 32 that adjust position, height, or attitude of various components of the rear-mounted implement, such as for setting the penetration death of tilling teeth or for setting the pitch or attitude of the tiller.

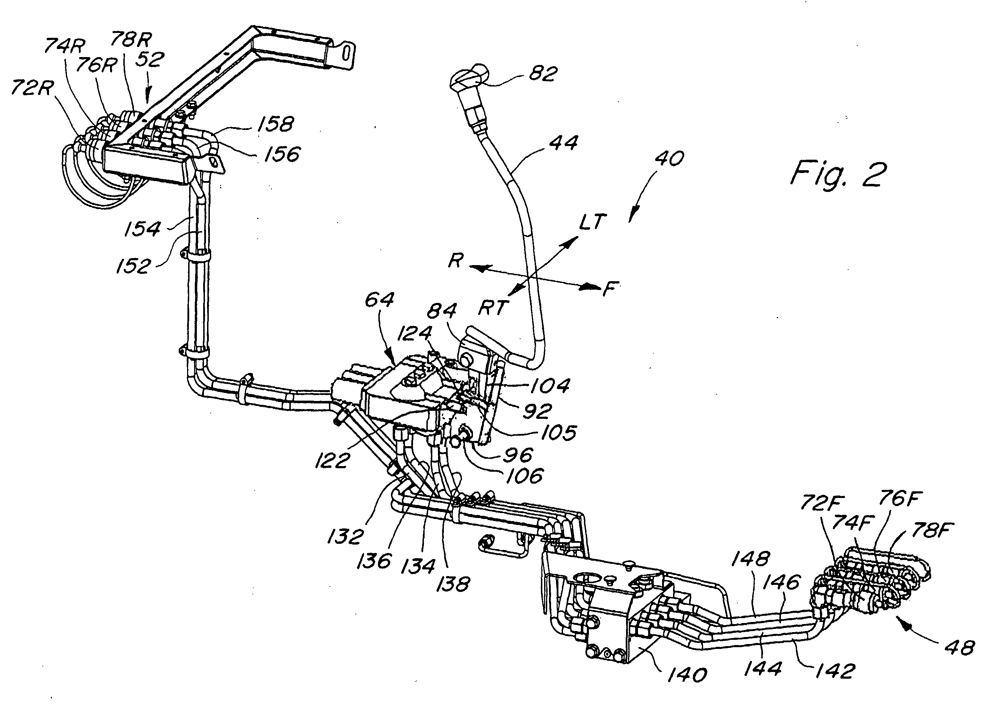

Figure 2 illustrates the hydraulic control system 40 in more detail, isolated from remaining portions of the tractor 20. The hydraulic control system includes a selective control valve 64 that has valve housings or bores therein, spool valves slidable within the housings, and a plurality of hydraulic fluid flow ports. Pressurized hydraulic fluid is flow connected to the selective control valve 64 and a low-pressure return line or tank drain line is also connected to the selective control valve 64.

The front-mounted manifold 48 includes four quick disconnect couplings 72F, 74F, 76F, 78F. The couplings 72F, 74F may be hydraulically connected to the hydraulic cylinders 56a, 56b, to opposite sides of the piston head within each of the cylinders, and function alternately as pressurized hydraulic fluid supply and return depending on whether the bucket 36 is being raised or lowered. The hydraulic couplers 76F, 78F may be hydraulically connected to the hydraulic cylinders 58a, 58b, to opposite sides of a piston head within each of the cylinders, and function alternately as pressurized hydraulic fluid supply and return, or function together as pressurized hydraulic fluid supply during regenerative circuit operation of the loader bucket during dumping, depending on the desired operation of the loader bucket. Alternatively, the hydraulic cylinders can be used for other implements, such as for a snowblower. Depending on the command from the control lever 44, the roles of the respective couplings of each pair are reversed for reverse movement of the respective cylinder.

The rear-mounted manifold 52 includes four quick disconnect hydraulic couplings 72R, 74R, 76R, 78R. The couplings 72R, 74R may be hydraulically connected to a first rear hydraulic cylinder (not shown), to opposite sides of the piston head within the cylinder, and function alternately as pressurized hydraulic fluid supply and return depending on the desired extension or retraction of the cylinder rod. The hydraulic couplers 76R, 78R may be hydraulically connected to another hydraulic cylinder (not shown), to opposite sides of a piston head within the cylinder, and function alternately as pressurized hydraulic fluid supply and drain-to-tank, depending on the desired extension or retraction of the cylinder rod. Depending on the command from the control lever 44, the roles of the respective couplings of each pair can be reversed for reverse movement of the respective cylinder.

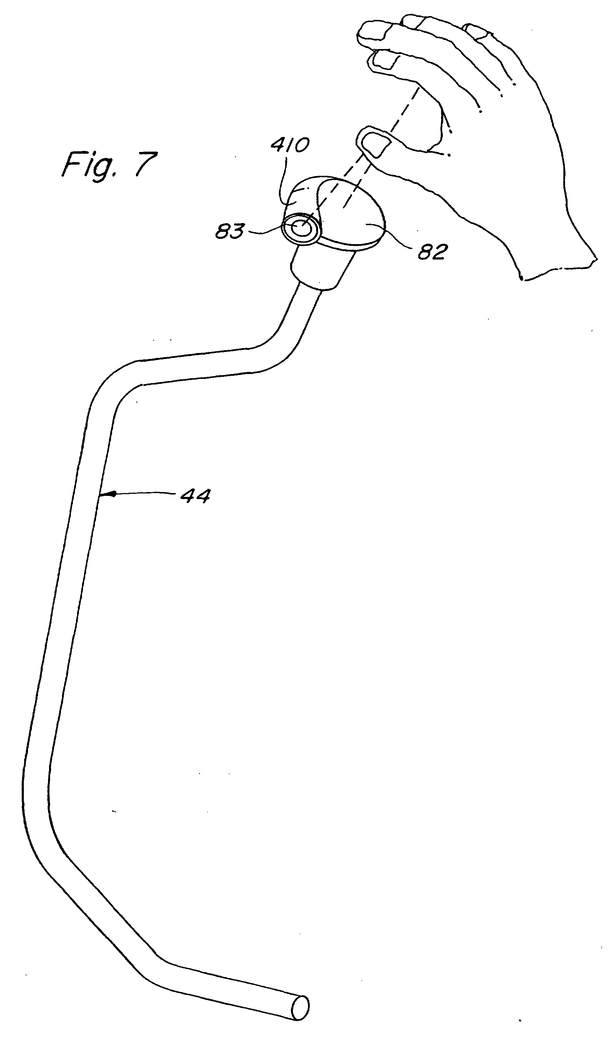

The control lever 44 includes an operator grippable knob 82 and a diverter switch 83 (shown in Figure 7). The diverter switch 83 is movable by the operator's thumb or finger to change a state thereof. The diverter switch 83 may be a momentary switch requiring a continuous pressing to change switch states, or may be a toggle-type switch which changes states each time the switch is pressed and does not require a continuous pressing.

The control lever 44 is welded to a yoke 84. The yoke 84 is connected at a ball joint to a first vertical linkage 92. The first vertical linkage 92 is connected at a ball joint to a first bell crank 96. The yoke 84 is connected at a ball joint to a second vertical linkage 104 that is connected at a ball joint to a second bell crank 105. The bell cranks 96, 105 are independently pivotable on a base axle 106. The base axle 106 is rotatably carried on stationary structure (not shown) of the tractor. The first bell crank 96 is pin connected to a spool 122, and the second bell crank 105 is pin connected to a second spool 124. The spools 122, 124 extend into valve housings provided in the selective control valve 64.

As can be understood from Figure 2, downward movement of the vertical linkages 92, 104 will pivot the bell cranks 96, 105 about the base axle 106 to either insert or retract the spools 122, 124 into or out of the associated cylinder of the associated cylinder of the selective control valve 64.

Shifting the control lever forwardly in the direction F lowers the loader bucket. Pulling the control lever rearwardly in the direction R raises the bucket. A right shift of the control lever, in the direction RT, depending on the extent of the right shift, acts to dump the bucket, with an extreme right shift causing a dumping of the bucket using the regenerative circuit, for faster dumping. A left shift of the control lever, in the direction LT causes the bucket to roll back or curl upwardly.

The selective control valve 64 communicates pressurized hydraulic fluid, and provides a return route to supply tank, through a first pair of hydraulic tubes 132, 134. The determination of which of the tubes is for pressurized hydraulic fluid delivery or return-to-tank depends on the position of the spool 122 within the selective control valve 64, controlled by the control lever 44. The selective control valve 64 also communicates pressurized hydraulic fluid, and provides a route to tank drain, through a second pair of hydraulic tubes 136, 138. The determination of which of the tubes is for pressurized hydraulic fluid delivery or return-to-tank depends on the position of the spool 124 within the selective control valve 64, controlled by the control lever 44.

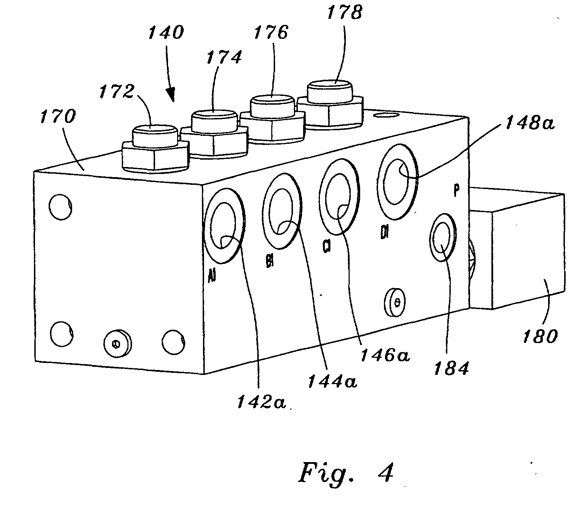

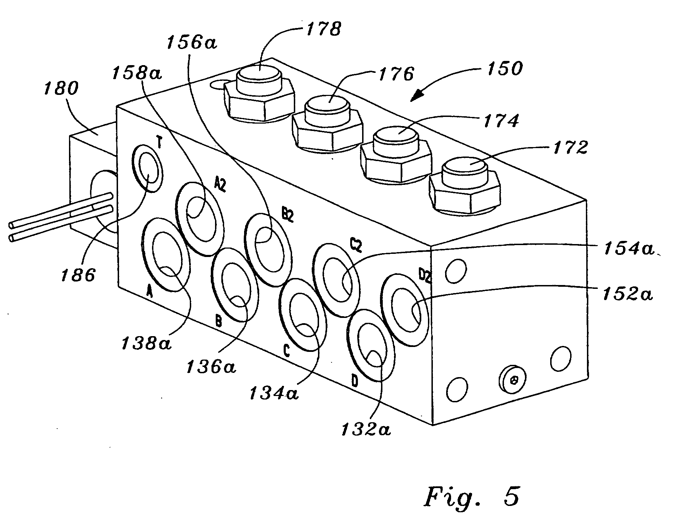

The tubes 132, 134, 136, 138 are routed to a diverter valve 140, particularly to inlet ports 132a, 134a, 136a, 138a of the diverter valve 140 (shown in Figure 5). Hydraulic tubes 142, 144, 146 148 are connected between the couplings 72F, 74F, 76F, 78F and outlet ports 142a, 144a, 146a, 148a of the diverter valve 140 (shown in Figure 4), respectively. Further hydraulic tubes 152, 154, 156, 158 are conducted between the rear couplings 72R, 74R, 76R, 78 R and rear outlet ports 152a, 154a, 156a, 158a of the diverter valve 140 (shown in Figure 5), respectively.

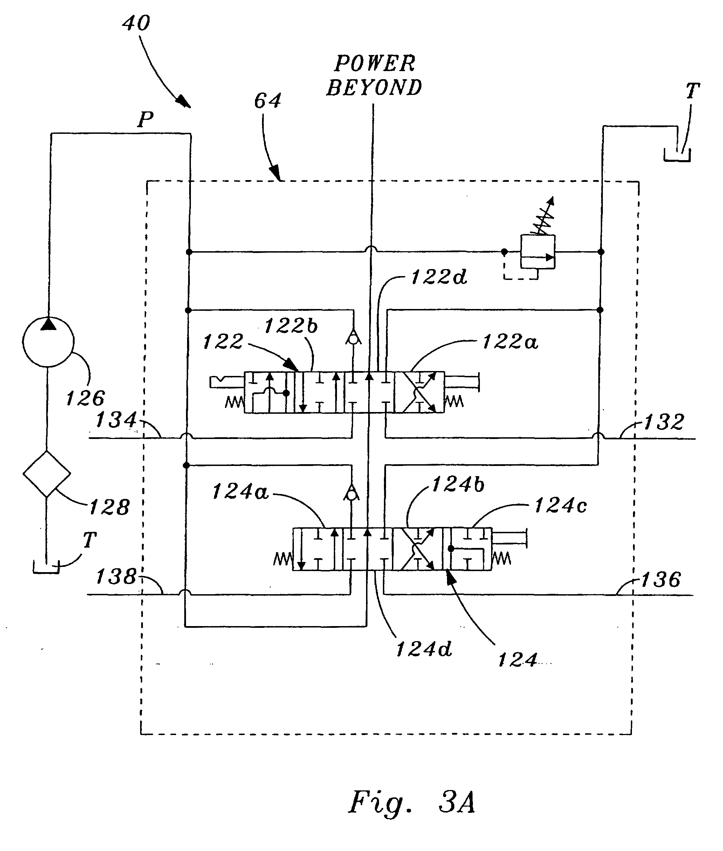

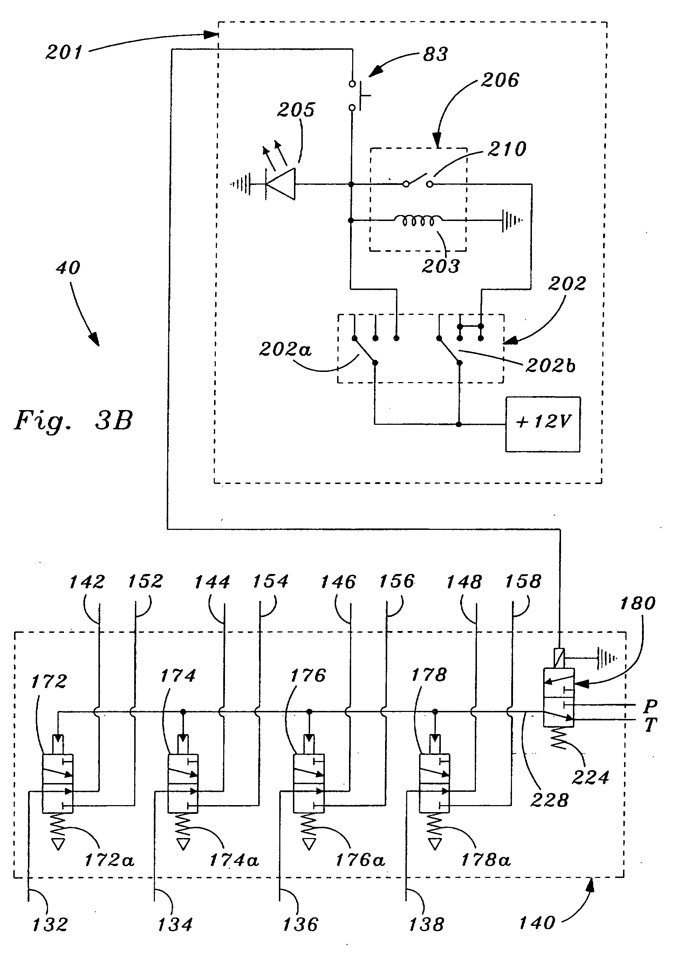

Figures 3A and 3B illustrate the control system 40 of the invention. Figure 3A illustrates that the pressurized hydraulic fluid P is supplied by a pump 126 taking suction from the tank reservoir T through a screen 128. The pump 126 charges the housing for the two spools 122, 124.

The spool 122 controls the raising and lowering of the bucket depending upon the position of the spool within the control valve 64. Depending on the position of the spool 122, either the tube 132 or the tube 134 is supplied with pressurized hydraulic fluid, and the respective other tube and is connected to tank drain or reservoir (T). The spool 122 has a lift bucket position 122a, wherein the tube 132 is pressurized (P) and the tube 134 is connected to tank (T). The spool 122 has a lower bucket position 122b, wherein the tube 134 is pressurized (P) and the tube 132 is connected to tank (T). The spool 122 is shown in the neutral position 122d.

The spool 124 controls the rotational movement of the bucket for curling or dumping the bucket depending on the position of the spool 124 within the control valve 64.

The spool 124 comprises a four-position selectable valve. A retracted position 124a of the spool 124 in a direction out of an associated cylinder of the control valve 64 corresponds to curling of the bucket, wherein the tube 138 is pressurized (P) and the tube 136 is connected to tank (T). The spool 124 has an intermediate position 124b penetrating the associated cylinder of the control spool 64 corresponding to a controlled dumping of the bucket, wherein the tube 136 is pressurized (P) and the tube 138 is connected to tank (T) . The spool 124 has an extended position 124c penetrating the associated cylinder of the control valve 64 represents a regenerative circuit-operable position corresponding to a fast dumping of the bucket, wherein both tubes 136, 138 are pressurized (P). The valve 124 is shown in the neutral position 124d.

Figure 3B illustrates the tubes 132, 134, 136, 138 connected to the diverter valve 140 for flow connection to the control valve 64; the tubes 142, 144, 146, 148 connected to the diverter valve 140 for connection to the front manifold 48; and the tubes 152, 154, 156, 158 connected to the diverter valve 140 for connection to the rear manifold 52.

An electrical switch circuit 201 for activating the diverter valve 140 is illustrated. A separate diverter activation switch 202 must be in the "on" position for the diverter switch 83 to be active. The switch 202 is of the type that defaults to open if power is lost, such as when the tractor is turned off. The activation switch 202 is a double pole, three-position switch. The three positions are off, on, and engage. The engage position is a momentary operation. Both poles move in unison when operating the switch. To activate the switch circuit 201, the activation switch 202 must be held in the engage position. Current flows from throw 202a and energizes the relay coil 203 which causes the relay contacts 210 to connect. During the same operation, current flows from the throw 202b, through the mode relay and latches the relay coil. At this point, current is supplied to the diverter switch 83 and an indicator LED 205. When the activation switch 202 is released, it moves to the on position and power is supplied to the switch 83, and the indicator LED via the latched relay. Power is supplied to the entire circuit from the key switch "on" position. When power is lost to the system, the relay opens, cutting power to the diverter switch 83. This circuit 201 insures that the diverter is not inadvertently operated, since the prior closing of the switch 202 is required to operate the diverter switch 83. The circuit ensures that if power is lost, the lockout switch 202 must be reset, otherwise the diverter automatically defaults to the front hydraulic implement, typically the loader bucket. The activation switch 202 can be located in the operator station apart from the control lever 44.

When active, closing the switch 83 actuates the solenoid pilot valve 180, causing the valve 180 to shift against the urging of a spring 224. Once shifted, a source of pressurized hydraulic fluid (P) is communicated into a pilot chamber 228. Pressurized hydraulic fluid is supplied to an inlet port 184 (Figure 4), and a return-to-tank (T) outlet is connected at the return-to-tank tank port 186 (Figure 5). The pressurized fluid in the pilot chamber 228 is communicated to pilot chambers of the four spool valves or cartridge valves 172, 174, 176, 178. Against spring force from springs 172a, 174a, 176a, 178a, the cartridge valves are shifted and the pressurized hydraulic flow from the inlet ports 132a, 134a, 136a, 138a is shifted from the front outlet ports 142a, 144a, 146a, 148a to the rear outlet ports 152a, 154a, 156a, 158a. Before this shift, the cartridge valves direct hydraulic fluid to or from the control valve 64 and the tubes 142, 144, 146, 148 to serve the front manifold 48. After shifting, the cartridge valves direct fluid to or from the control valve 64 and the tubes 152, 154, 156, 158, to serve the rear manifold 52.

Figures 4 and 5 illustrate the diverter valve 140 comprising a block shaped housing 170 having a plurality of vertical bores that holds cartridge valves 172, 174, 176, 178. The cartridge valves are positionable between one of two states. In a normal operating state, each cartridge valve allows flow from the inlet ports 132a, 134a, 136a, 138a to the outlet ports 142a, 144a, 146a, 148a, respectively. The normal operating state thus is for the front implement, typically a loader bucket, to be active. In the normal operating state pressurized hydraulic fluid is prevented from reaching the couplings 72R, 74R, 76R, 78R via the rear diverter valve outlets 152a, 154a, 156a, and 158a.

The operator selects the rear couplings 72R, 74R, 76R, 78R to be active and the front couplings 72F, 74F, 76F, 78F to the disabled, by use of the switch 83. A shift of the cartridge valves 172, 174, 176, 178 connects the inlet ports 132a, 134a, 136a, 138a to the rear outlet ports 152a, 154a, 156a, 158a, respectively. Hydraulic fluid can be thus supplied to, or a drain return line provided from, the rear couplings 72R, 74R, 76R, and 78R. The shift of the cartridge valves effectively blocks flow between the inlet ports 132a, 134a, 136a, 138a and the front outlet ports 142a, 144a, 146a, 148a.

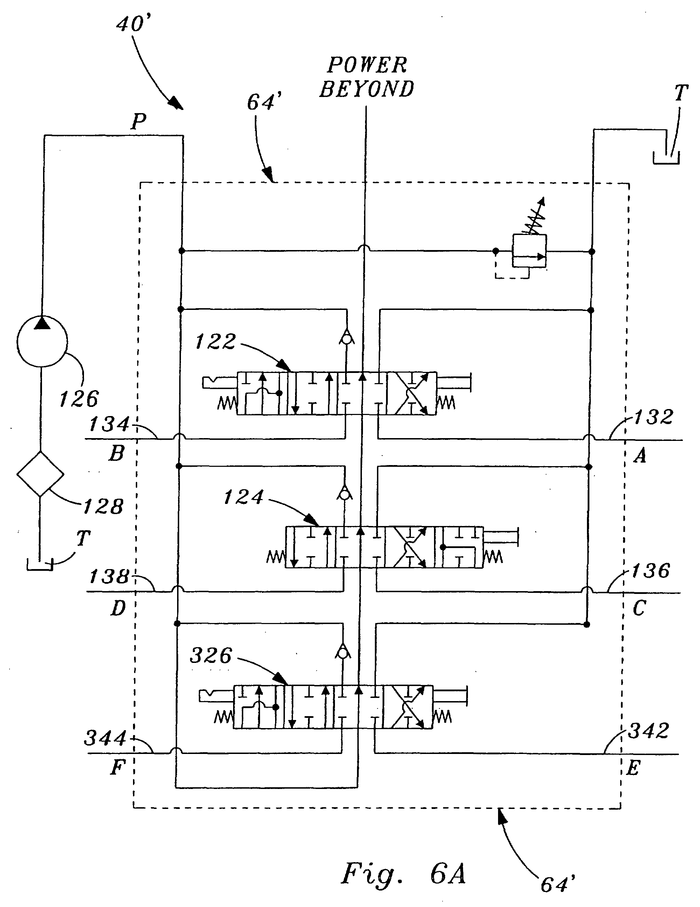

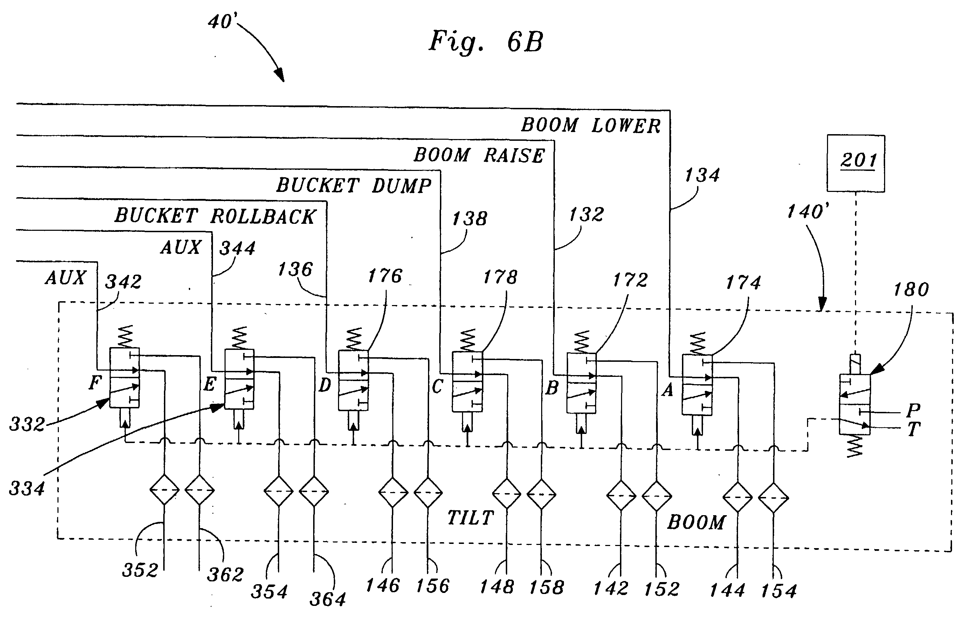

Figures 6A and 6B illustrate an alternate embodiment control system 40' wherein an alternate selective control valve 64' incorporates a third spool valve 326 serving an additional hydraulic cylinder. The control lever can selectively position the spool valve 326 using a third motion, such as a twisting motion of the control lever. The spool 326 could alternatively be a solenoid operated spool, controlled by an operator actuated switch.

An alternate diverter valve 140' is used which incorporates two additional cartridge valves 332, 334 hydraulically connected to the third spool valve 326 of the selective control valve, via tubes 342, 344. The cartridge valve 332 is alternately hydraulically flow-connected to two tubes 352,362 serving the front and rear manifolds 48, 52, respectively. The cartridge valve 334 is alternately hydraulically flow-connected to two tubes 354,364 serving the front and rear manifolds 48, 52, respectively. Thus, three hydraulic operations can be diverted from a front of the vehicle to the rear of the vehicle.

The solenoid valve 180 and the cartridge valves 172, 174, 176, 178, 332 334 would be hydraulically connected, and electrically connected in the same manner as shown in Figure 3B. The circuit 201 can be used to control the solenoid 180.

The diverter valve 140' illustrated schematically in Figure 6B, would be a physical modification of the diverter valve 140 illustrated in Figures 4 and 5. The diverter valve 140' is lengthened, and expanded from four cartridge valves to six cartridge valves with a corresponding increase in the number of inlet and outlet ports. Additionally, the front and rear manifolds 48, 52 are expanded to each include six quick disconnect couplings, rather than four as shown in Figures 1 and 2.

Although the diverter valve is described above using plural cartridge valves, it is encompassed by the invention to use a single spool within a diverter valve housing to replace two or more, or all, of the cartridge valves.

Although the control systems 40, 40' are described with regard to a front implement and a rear implement, the location of the implements are not limited to front and rear. Other locations of the first and second implements (and/or associated couplers) are encompassed by the invention. The first implement or second implement could be a mid located implement. The control systems 40, 40' could be used to alternately use two front mounted implements or to alternatively use two rear mounted implements. For example, a 4 in 1 bucket or clamshell bucket could be alternately controlled with the loader bucket at a front of a vehicle using the diverter valve 140. The first and second hydraulic implements could be selected as applicable from the implements including: a loader, a grapple, a snowblower, a blade, a mower deck, a front hitch, a cultivator, a tiller, or other known hydraulically operated or adjusted implements.

Figure 7 illustrates the control lever 44 having the control knob 82 with an indentation 410 for housing the diverter switch 83. The diverter switch, as shown, can comprise a push button type switch. The diverter switch can be ergonomically operated using the operator's thumb while maintaining control of the control lever knob.

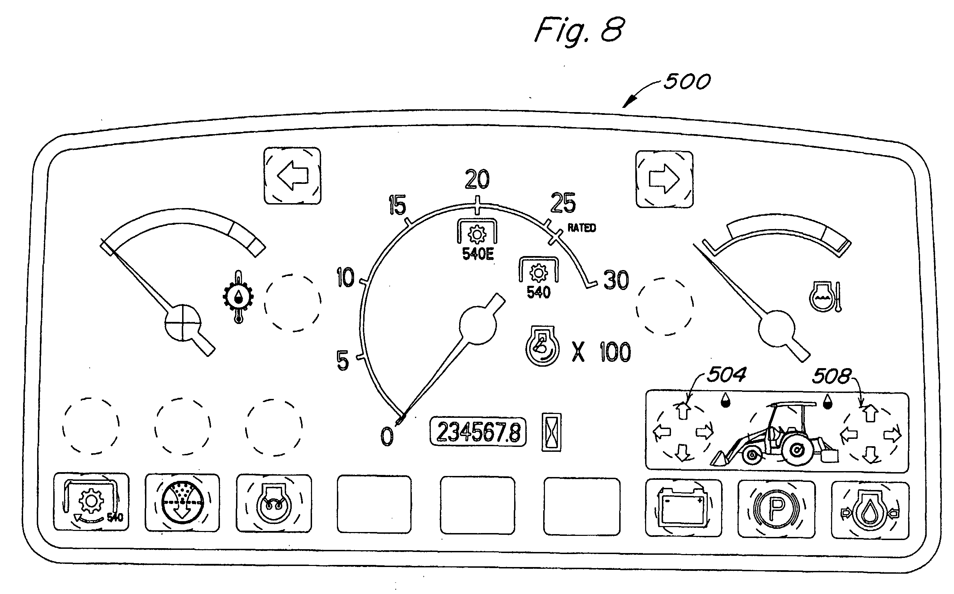

Figure 8 illustrates an exemplary operator's control panel 500 that illustrates the status of the diverter valve 140, 140'. With the diverter valve in its normal position, control remains at the front of the vehicle indicated by illumination of the diagram 504. When the diverter valve is activated, the illumination is switched to the rear diagram 508.

It is to be understood that no limitation with respect to the specific apparatus illustrated herein is intended or should be inferred. It is, of course, intended to cover by the appended claims all modifications as fall within the scope of the claims.

## Claims

1. A hydraulic system for a utility vehicle (20), comprising a first hydraulic implement (34), a second hydraulic implement (32), a valve (140, 140'), said first and second hydraulic implements (32, 34) hydraulically flow-connected to said valve (140, 140'), a source of pressurized hydraulic fluid (126) connected to said valve (140), and a control actuator signal-connected to said diverter valve (140, 140') for alternately operating said first and second hydraulic implements (32, 34), **characterised in that** said valve (140, 140') is a diverter valve, selectively positioned to connect said source (126) to either said first or to said second hydraulic implements (32, 34).

2. A hydraulic system for a utility vehicle (20), comprising: a first pair of hydraulic couplings for a hydraulic implement (34); a second pair of hydraulic couplings for a hydraulic implement (32); a valve (140, 140'), said first and second pairs of hydraulic couplings hydraulically flow-connected to said valve (140, 140'); a source of pressurized hydraulic fluid (126) connected to said valve (140, 140') and a control actuator signal-connected to said diverter valve (140, 140') for alternately operating said first and second pairs of hydraulic couplings, **characterised in that** said valve (140, 140') is a diverter valve, selectively positioned to connect said source (126) to either said first or to said second hydraulic implements (32, 34).

3. The system according to claim 1 or 2, **characterized in that** said diverter valve (140, 140') comprises a solenoid-operated pilot valve (180) that is electrically signal-connected to said control actuator, and a plurality of pilot operated hydraulic valves connected to said pilot valve (172, 174, 176, 178), actuation of said pilot valve (180) changing the position of said hydraulic valves (172, 174, 176, 178).

4. The system according to one or several of the previous claims, **characterized in that** said first hydraulic implement (32) is mounted to a front of the utility vehicle (20), and said second hydraulic implement (34) is mounted to a rear of the utility vehicle (20) or **in that** both implements (32, 34) are located on a same end of the vehicle (20).

5. The system according to one or several of the previous claims, **characterized in that** said control actuator comprises a lever (44) positionable to control a selected one of said first and second hydraulic implements (32, 34), and a control switch (83) connected to said lever (44), actuation of said control switch (83) changing state of said diverter valve (140, 140') to select one of said first and second hydraulic implements (32, 34).

6. The system according to claim 5, **characterized in that** said control switch (83) is located on said lever (44) in a position to be hand- or thumb- activated and/or is a momentary switch.

7. The system according to one or several of the previous claims **characterized by** a diverter activation switch (202) in an electrical circuit with said control switch (83), a change of state of said activation switch (202) required to make operable said control switch (83).

8. The system according to one or several of the previous claims, **characterized in that** said diverter valve (140, 140') comprises a valve housing and a plurality of cartridge valves, said cartridge valves held within said valve housing, and a solenoid operated pilot valve actuated to provide hydraulic pressure to change the outlet of said cartridge valves.

9. The system according to one or several of the previous claims, **characterized in that** said first hydraulic implement (34) comprises a loader and said second hydraulic implement (32) comprises a rear-mounted implement.

10. The system according to one or several of the previous claims, **characterized in that** said first hydraulic implement (34) and/or said second implement (32) comprise(s) plural hydraulic functions.

11. The system according to one or several of the previous claims, wherein said second hydraulic implement (32) comprises one implement selected from the group consisting of: a grapple, a snowblower, a blade, a mower deck, a front hitch, a cultivator and a tiller.

## Patentansprüche

1. Ein Hydrauliksystem für ein Nutzfahrzeug (20) mit einem ersten hydraulischen Arbeitsgerät (20), einem zweiten hydraulischen Arbeitsgerät (32), einem Ventil (140), 140'), wobei das erste und zweite hydraulische Arbeitsgerät (32, 34) mit dem Ventil (140, 104') hydraulisch flußverbunden sind, einer Quelle (126) von unter Druck stehender Hydraulikflüssigkeit, die mit diesem Ventil (140) verbunden ist und einem Steuerungsstellglied, das mit diesem Ventil (140, 140') signalverbunden ist, um die besagten ersten und zweiten hydraulischen Arbeitsgeräte (32, 34) abwechselnd zu betreiben, **dadurch gekennzeichnet, dass** das Ventil (140, 140') ein Umleitventil ist, welches ausgewählt angeordnet ist, um die Quelle (126) entweder mit besagtem ersten oder mit besagtem zweiten hydraulischen Arbeitsgerät (32, 34) zu verbinden.

2. Ein Hydrauliksystem eines Nutzfahrzeugs (20) mit einem ersten Paar hydraulischer Anschlüsse für ein hydraulisches Arbeitsgerät (34); einem zweiten Paar hydraulischer Anschlüsse für ein hydraulisches Arbeitsgerät (32); einem Ventil (140, 140'), wobei die ersten und zweiten Paare hydraulischer Anschlüsse mit dem besagten Ventil (140, 140') hydraulisch flußverbunden sind, einer Quelle unter Druck stehender Hydraulikflüssigkeit, die mit dem besagten Ventil (140, 140') verbunden ist und einem Steuerungsstellglied des mit dem Ventil (140, 140') verbunden ist, um abwechselnd das erste und zweite Paar hydraulischer Anschlüsse zu betreiben, **dadurch gekennzeichnet, dass** das besagte Ventil (140, 140') ein Umleitventil ist, welches ausgewählt angeordnet ist, um die Quelle (126) entweder mit besagtem ersten oder mit besagtem zweiten hydraulischen Arbeitsgerät (32, 34) zu verbinden.

3. Das System nach Anspruch 1 oder 2, **dadurch gekennzeichnet, dass** das Umleitventil (140, 140') ein solenoidbetätigtes Umschaltventil (180), das mit dem Steuerungsstellglied elektrisch signalverbunden ist, und eine Mehrzahl von pilotbetätigten Hydraulikventilen aufweist, die mit dem Umschaltventil (172, 184, 176, 178) verbunden sind, wobei eine Betätigung des besagten Umschaltventils (180) die Stellung der hydraulischen Ventile (172, 173, 176, 178) verändert.

4. Das System nach einem oder mehreren der vorherigen Ansprüche, **dadurch gekennzeichnet, dass** das erste hydraulische Arbeitsgerät (32) an einer Vorderseite des Nutfahrzeugs (20) angebracht ist, und das zweite hydraulische Arbeitsgerät (34) an einer Rückseite des Nutzfahrzeugs angebracht ist oder das beide Arbeitsgeräte (32, 34) an dem gleichen Ende Fahrzeugs (20) angeordnet sind.

5. Das System nach einem oder mehreren der vorherigen Ansprüche, **dadurch gekennzeichnet, dass** das Steuerungsstellglied einen Hebel (44), der zur Steuerung eines ausgewählten der ersten und zweiten hydraulischen Arbeitsgeräte (32, 34) positionierbar ist, und einem Steuerungsschalter (83) der mit dem Hebel (44) verbunden ist, aufweist, wobei eine Betätigung des besagten Steuerschalters (83) den Zustand des Umschaltventils (140, 140') verändert, um eines der ersten und zweiten hydraulischen Arbeitsgeräte (32, 34) auszuwählen.

6. Das System nach Anspruch 5, **dadurch gekennzeichnet, dass** der Steuerungsschalter (38) an dem besagten Hebel (44) in einer Position angeordnet ist, um hand oder daumenbetätigt zu werden und/oder ein Momentanschalter ist.

7. Das System nach einem oder mehreren der vorherigen Ansprüche, **gekennzeichnet durch** einen Umschaltaktivierungsschalter (202) in einem elektrischen Stromkreis mit dem Steuerungsschalter (83), wobei eine Zustandsänderung des besagten Aktivierungsschalters (202) notwendig ist, um den Steuerungsschalter (83) betätigbar zu machen.

8. Das System nach einem oder mehreren der vorherigen Ansprüche, **dadurch gekennzeichnet, dass** das Umschaltventil (140, 140') ein Ventilgehäuse und eine Mehrzahl von Ventilpatronen aufweist, wobei die besagten Ventilpatronen in dem Ventilgehäuse gehalten werden und ein solenoidbetätigtes Pilotventil betätigt wird, um Hydraulikdruck zur Verfügung zu stellen, um den Ausgang der besagten Ventilpatronen zu ändern.

9. Das System nach einem oder mehreren der vorherigen Ansprüche, **dadurch gekennzeichnet, dass** das besagte erste hydraulische Arbeitsgerät (34) einen Lader aufweist und das besagte zweite hydraulische Arbeitsgerät (32) ein rückseitig-angebrachtes Arbeitsgerät aufweist.

10. Das System nach einem oder mehreren der vorherigen Ansprüche, **dadurch gekennzeichnet, dass** das erste hydraulische Arbeitsgerät (34) und/oder das besagte zweite Arbeitsgerät (32) mehrere hydraulische Funktionen aufweist/en.

11. Das System nach einem oder mehreren der vorherigen Ansprüche, wobei besagtes zweites hydraulisches Arbeitsgerät (32) ein aus der Gruppe bestehend aus: einem Mehrschalengreifer, einem Schneegebläse, einem Schild, einer Fronthubeinrichtung, einem Grubber und ein Kultivator aufweist.

## Revendications

1. Système hydraulique pour un véhicule utilitaire (20), comprenant un premier instrument hydraulique (34), un second instrument hydraulique (32), une soupape (140, 140'), lesdits premier et second instruments hydrauliques (32, 34) étant connectés par flux hydraulique à ladite soupape (140, 140'), une source de fluide hydraulique sous pression (126) connectée à ladite soupape (140), et un actionneur de commande connecté par signal à ladite soupape (140, 140') pour actionner alternativement ledit premier et ledit second instruments hydrauliques (32, 34) **caractérisé en ce que** ladite soupape (140, 140') est une soupape d'aiguillage, sélectivement positionnée pour connecter ladite source (126) audit premier ou audit second instrument hydraulique (32, 34).

2. Système hydraulique pour un véhicule utilitaire (20), comprenant : une première paire de raccords hydrauliques pour un instrument hydraulique (34) ; une seconde paire de raccords hydrauliques pour un instrument hydraulique (32) ; une soupape (140, 140'), lesdites première et seconde paires de raccords hydrauliques étant connectées par flux hydraulique à ladite soupape (140, 140') ; une source de fluide hydraulique sous pression (126) connectée à ladite soupape (140, 140') et un actionneur de commande connecté par signal à ladite soupape (140, 140') pour actionner alternativement lesdites première et seconde paires de raccords hydrauliques, **caractérisé en ce que** ladite soupape (140, 140') est une soupape d'aiguillage, sélectivement positionnée pour connecter ladite source (126) audit premier ou audit second instrument hydraulique (32, 34).

3. Système selon la revendication 1 ou 2, **caractérisé en ce que** ladite soupape d'aiguillage (140, 140') comprend une soupape pilote actionnée par solénoïde (180) qui est connectée électriquement par signal audit actionneur de commande, et une pluralité de soupapes hydrauliques actionnées par pilote connectées à ladite soupape pilote (172, 174, 176, 178), l'actionnement de ladite soupape pilote (180) changeant la position desdites soupapes hydrauliques (172, 174, 176, 178).

4. Système selon une ou plusieurs des revendications précédentes, **caractérisé en ce que** ledit premier instrument hydraulique (32) est monté à l'avant du véhicule utilitaire (20), et ledit second instrument hydraulique (34) est monté à l'arrière du véhicule utilitaire (20) ou **en ce que** les deux instruments (32, 34) sont situés à la même extrémité du véhicule (20).

5. Système selon une ou plusieurs des revendications précédentes, **caractérisé en ce que** ledit actionneur de commande comprend un levier (44) pouvant être positionné pour commander l'un desdits premier et second instruments hydrauliques (32, 34) sélectionné, et un commutateur de commande (83) connecté audit levier (44), l'actionnement dudit commutateur de commande (83) modifiant l'état de ladite soupape d'aiguillage (140, 140') pour sélectionner l'un desdits premier et second instruments hydrauliques (32, 34).

6. Système selon la revendication 5, **caractérisé en ce que** ledit commutateur de commande (83) est situé sur ledit levier (44) dans une position lui permettant d'être activé par la main ou le pouce et/ou est un commutateur momentané.

7. Système selon une ou plusieurs des revendications précédente, **caractérisé par** un commutateur d'actionnement d'aiguillage (202) dans un circuit électrique avec ledit commutateur de commande (83), un changement d'état dudit commutateur d'actionnement (202) étant requis pour rendre utilisable ledit commutateur de commande (83).

8. Système selon une ou plusieurs des revendications précédentes, **caractérisé en ce que** ladite soupape d'aiguillage (140, 140') comprend un boîtier de soupape et une pluralité de soupapes à cartouches, lesdites soupapes à cartouches se trouvant dans ledit boîtier de soupape, et une soupape pilote actionnée par pilote actionnée pour fournir la pression hydraulique nécessaire afin de modifier la sortie desdites soupapes à cartouches.

9. Système selon une ou plusieurs des revendications précédentes, **caractérisé en ce que** ledit premier instrument hydraulique (34) comprend un chargeur et ledit second instrument hydraulique (32) comprend un instrument monté à l'arrière.

10. Système selon une ou plusieurs des revendications précédentes, **caractérisé en ce que** ledit premier instrument hydraulique (34) et/ou ledit second instrument (32) comprend (comprennent) plusieurs fonctions hydrauliques.

11. Système selon une ou plusieurs des revendications précédentes, dans lequel ledit second instrument hydraulique (32) comprend un instrument choisi dans le groupe comprenant : un grappin, une souffleuse à neige, une lame, un pont de faucheuse, un attelage avant, un motoculteur et un cultivateur.
